# EUROPÄISCHE PATENTSCHRIFT

(11) **EP 2 037 513 B1**
(45) Veröffentlichungstag und Bekanntmachung des Hinweises auf die Patenterteilung: **23.06.2010**
(21) Anmeldenummer: 07017816.5
(22) Anmeldetag: 12.09.2007
(51) Int. Cl.: H01M 2/04, H01M 10/12

(54) **Akkumulator**
Battery
Accumulateur

(43) Veröffentlichungstag der Anmeldung: 18.03.2009
(73) Patentinhaber: HOPPECKE Batterien GmbH & Co. KG, 59929 Brilon (DE)
(72) Erfinder: Kesper, Heinrich, 34508 Willingen (DE)
(74) Vertreter: Stenger, Watzke & Ring

(56) Entgegenhaltungen:
- WO-A-2005/022679
- DE-A1- 1 812 728
- DE-B- 1 173 553
- FR-A- 2 148 657
- US-A- 2 832 815

## Beschreibung

Die vorliegende Erfindung betrifft einen Akkumulator nach dem Oberbegriff des Anspruchs 1. Ferner betrifft die Erfindung einen Akkumulatordeckel sowie ein Akkumulatorgehäuse.

Die vorliegende Erfindung bezieht sich auf Akkumulatoren, insbesondere Blei-Säure-Akkumulatoren, die als Energiespeicher für hohe Leistungsanforderungen im Traktionsbereich eingesetzt werden, so beispielsweise bei Gabelstaplern, elektrischen Hubeinrichtungen und dergleichen. Derartige Akkumulatoren weisen hoch belastbare Zellen auf, die darüber hinaus mit großen Strömen beaufschlagt werden können. Solche Akkumulatoren sind sehr teuer, so daß die Wartung einzelner Zellen erwünscht ist, um bei einem Defekt einer einzelnen Zelle nicht den kompletten Akkumulator austauschen zu müsse. Die Zellen sind durch Zellwände im Akkumulatorgehäuse gebildet, die jeweils gegeneinander getrennte Zellenräume bilden. In den Zellenräumen sind Elektroden in einem Elektrolyten eingetaucht angeordnet. Im Stand der Technik ist es üblich, daß jede Zelle für sich gegenüber den anderen mit einem eigenen Zellendeckel elektrolytdicht verschlossen ist. Die Zellen sind in einem gemeinsamen Akkumulatorgehäuse angeordnet, welches mittels eines separaten Akkumulatordeckels verschließbar ist.

Um die Wartungsarbeiten an den einzelnen Zellen zu ermöglichen, ist es im Stand der Technik bekannt, den Akkumulatordeckel lösbar mit dem Akkumulatorgehäuse zu verbinden. Nach Entfernen des Akkumulatordeckels besteht Zugriff auf die einzelnen Zellendeckel, die bedarfsweise zur Wartung der jeweiligen Zelle abgenommen werden können. Oftmals sind die einzelnen Zellendeckel mit einem gemeinsamen Entlüftungssystem für alle Zellen verbunden, welches durch den Akkumulatordeckel ebenfalls geschützt ist.

Eine mit einem elektrolytdichten Deckel verschließbare Akkumulatorzelle ist aus der US 2,832,815 sowie der DE 1 173 553 A bekannt. Ferner beschreiben die DE 1 812 728 A1 und die WO 2005/022679 A1 einen Bleiakkumulator, bei dem ein einziger Batteriedeckel vorgesehen ist, mit dem sämtliche Zellen des Akkumulators elektrolytdicht verschlossen werden können.

Die Erfindung hat es sich zur **Aufgabe** gemacht, einen gattungsgemäßen Akkumulator hinsichtlich der Montage zu vereinfachen.

Als **Lösung** wird mit der Erfindung ein gattungsgemäßer Akkumulator nach mit den kennzeichnenden Merkmalen des Anspruchs 1 vorgeschlagen. Insbesondere ist der Akkumulatordeckel lösbar verrastbar am Akkumulatorgehäuse angeordnet.

Die vorteilhafte Ausgestaltung gemäß der Erfindung erlaubt es, den Akkumulatordeckel und die einzelnen Zellendeckel quasi zu einem Bauteil zusammenzufassen und auf diese Weise neben einer Kostenreduzierung auch eine Vereinfachung der Montage zu erreichen. Der Begriff elektrolytdicht meint im Sinne der Erfindung, daß der Elektrolyt der jeweiligen Zelle diese beim bestimmungsgemäßen Betrieb des Akkumulators nicht verlassen kann, also auslaufen oder in eine andere Zelle gelangen kann. Darüber hinaus kann die Zuverlässigkeit verbessert werden, weil bei korrektem Sitz des Akkumulatordeckels zugleich auch der elektrolytdichte Verschluß jeder Zelle erreicht werden kann. Die Gefahr von Montagefehlem kann deshalb deutlich reduziert werden. Der Deckel kann zur Abdeckung aller oder auch einer begrenzten Anzahl der Zellen vorgesehen sein. Vorzugsweise weisen der Akkumulatordeckel und/oder das Akkumulatorgehäuse die Zellen elektrolytdicht verschließende Dichtmittel auf. Diese können durch Dichtungsringe oder Dichtungsstreifen aus Kunststoff, Gummi oder dergleichen gebildet sein.

Weiterhin weist der Akkumulatordeckel zu Zellenwänden gegenüberliegend angeordnete Stege aufweist. Die Stege können das Dichtungsmittel selbst bilden oder Bestandteil hiervon sein. Im letzteren Fall liegen sie an den Stirnseiten der Zellenwände an, sobald der Akkumulatordeckel mit dem Akkumulatorgehäuse fest verbunden ist. So läßt sich ein einfaches, zuverlässiges Dichtungsmittel erreichen. Die Stege können natürlich zusätzlich auch ein Dichtungselement tragen, beispielsweise eine Dichtungslippe oder dergleichen. Dies erlaubt eine zuverlässige Abdichtung der Zellen gegeneinander mittels des Akkumulatordeckels.

Erfindungsgemäss ist vorgesehen, daß die Stege stirnseitig eine Nut aufweisen. Die Nut kann beispielsweise derart ausgebildet sein, daß sie die jeweiligen Zellenwände aufnehmen kann. In der Nut können beispielsweise elastische Ausformungen in Form von Dichtlippen oder dergleichen angeordnet sein, um eine gute Abdichtung zwischen den einzelnen Stellen erreichen zu können. Beim Aufsetzen des Akkumulatordeckels auf das Akkumulatorgehäuse werden zugleich die Wände der Zellen in die entsprechenden Nuten eingeführt. Auf diese Weise wird zugleich mit dem Aufsetzen des Akkumulatordeckels ein Verschließen der Zellen erreicht.

In einer vorteilhaften Weiterbildung wird vorgeschlagen, daß in der Nut ein Dichtungselement angeordnet ist. Das Dichtungselement kann beispielsweise durch einen Dichtungsring, vorzugsweise aus Kunststoff, Gummi oder dergleichen, gebildet sein. Das Dichtungselement ist vorteilhaft an den Querschnitt der Nut angepaßt. Es kann vorgesehen sein, daß das Dichtungselement lediglich in einem Nutgrund angeordnet ist, so daß zusätzlich ein Einführen der Zellenwände in die Nuten ermöglicht ist. Die Dichtungswirkung und eine Stabilität können weiter verbessert werden.

In einer vorteilhaften Weiterbildung wird vorgeschlagen, daß die Dichtungsmittel eine Labyrinthdichtung aufweisen. Die Labyrinthdichtung kann eine gute Abdichtung hinsichtlich des Elektrolyten erreichen. Zugleich kann aber eine Gasdurchlässigkeit bereitgestellt werden, so daß eine Entlüftung der Zellen ermöglicht werden kann.

Gemäß einer weiteren Ausgestaltung wird vorgeschlagen, daß am Akkumulator und/oder am Akkumulatorgehäuse angeordnete Verbindungsmittel vorgesehen sind. Mit den Verbindungsmitteln kann ein zuverlässiger Sitz des Akkumulatordeckels am Akkumulatorgehäuse erreicht werden. Die Verbindungsmittel können beispielsweise durch Klammern, Nieten, Schrauben und dergleichen gebildet sein.

Besonders vorteilhaft weisen die Verbindungsmittel Rastnuten und/oder Rastnasen auf. Vorzugsweise sind gegenüberliegend jeweils Rastnuten und Rastnasen vorgesehen, die im verbundenen Zustand des Akkumulatordeckels mit dem Akkumulatorgehäuse ineinandergreifen und eine feste Verbindung herstellen. Es kann vorgesehen sein, daß die Rastnuten an einem Bauteil und die Rastnasen jeweils am anderen Bauteil angeordnet sind. Natürlich können bedarfsweise die Rastnuten und Rastnasen auch wechselweise miteinander angeordnet sein. Die erstgenannte Ausgestaltung weist jedoch den Vorteil auf, daß sie sich bei Bedarf leicht lösen läßt.

Es wird ferner vorgeschlagen, daß die Verbindungsmittel elastisch vorgespannt sind. Vorzugsweise sind hiervon die Rastnasen betroffen, die durch Vorsprünge gebildet sind, die eine Elastizität aufweisen. Grundsätzlich könnten natürlich auch Rastnuten elastisch vorgespannt sein, wobei dies durch den die Rastnut aufweisenden Bereich bereitgestellt wird. Die Vorspannung kann entweder durch das Rastelement selbst oder auch durch ein separates Bauteil erreicht werden. Als separate Bauteile kommen hier insbesondere Federn in Betracht, die beispielsweise aus Kunststoff, Metall oder dergleichen gebildet sein können.

Gemäß einer weiteren Ausgestaltung sind die Verbindungsmittel einstückig mit dem Akkumulatordeckel und/oder dem Akkumulatorgehäuse ausgebildet. Auf diese Weise können separate Bauelemente eingespart werden. Darüber hinaus wird die Montage dahingehend erleichtert, daß keine separaten Bauelemente gehandhabt werden müssen. Auch ein Verlieren von Bauelementen kann vermieden werden. Die Montage kann deutlich erleichtert werden.

In einer vorteilhaften Weiterbildung wird vorgeschlagen, daß das Verbindungssystem Entrastmittel aufweist. Die Entrastmittel können beispielsweise durch Betätigungselemente gebildet sein, mit denen die Rastnasen aus ihrem verrasteten Zustand herausbewegt werden können. Sind die Rastnasen entrastet, kann der Akkumulatordeckel vom Akkumulatorgehäuse abgenommen werden. Natürlich kann auch vorgesehen sein, daß die Entrastmittel lediglich in Öffnungen oder dergleichen bestehen, durch die das entsprechende Rastelement in Entrastungsrichtung betätigbar ist.

Darüber hinaus wird vorgeschlagen, daß der Akkumulator eine Öffnung im Bereich der Rastnasen aufweist. Dies erlaubt es, die Rastnase von außen durch die Öffnung zu betätigen, so daß eine Entrastung stattfindet und der Akkumulatordeckel vom Akkumulatorgehäuse abgenommen werden kann. Vorzugsweise können Werkzeuge bereitgestellt werden, mit denen mehrere, insbesondere alle Rastnasen durch die entsprechenden Öffnungen zugleich betätigt werden können. Auf diese Weise kann trotz einer zuverlässigen Verbindung des Akkumulatordeckels mit dem Akkumulatorgehäuse eine einfache Lösung der Verbindung erreicht werden. Die Wartungsfreundlichkeit kann weiter verbessert werden.

Gemäß einer weiteren Ausgestaltung wird vorgeschlagen, daß der Akkumulatordeckel gegenüber dem Akkumulatorgehäuse in Öffnungsrichtung vorgespannt ist. Diese Ausgestaltung erweist sich insbesondere in der Verbindung von Rastnasen mit Rastnuten vorteilhaft, weil durch die Vorspannung die Verrastwirkung verstärkt werden kann. Es kann beispielsweise vorgesehen sein, daß eine Entrastung der Rastnasen erst dann möglich ist, wenn der Akkumulatordeckel entgegen seiner Vorspannung betätigt wird und die Rasten eine zusätzliche Sicherheit erreichen, insbesondere im Hinblick auf eine versehentliche Betätigung der Rastnasen.

Um eine Vorspannung zu erreichen, wird vorgeschlagen, daß der Akkumulatordeckel gegenüber dem Akkumulatorgehäuse durch die Dichtungsmittel vorgespannt ist. Auf diese Weise kann ein separates Mittel zum Vorspannen eingespart werden.

Gemäß einer weiteren vorteilhaften Ausgestaltung wird vorgeschlagen, daß die Verbindungsmittel vor Einwirkungen aus der Zelle heraus geschützt angeordnet sind. Dies führt einerseits dazu, daß die Verbindungsmittel beispielsweise durch aggressive Einwirkungen von Elektrolyt oder dergleichen geschützt sind und andererseits dahin, daß eine sichere Betätigung der Verbindungsmittel ermöglicht wird, ohne daß mit gefährlichen Einwirkungen durch Stoffe aus der Zelle zu rechnen ist. Die Sicherheit kann weiter verbessert werden. Darüber hinaus erreicht diese Ausgestaltung, daß eine Betätigung der Verbindungsmittel nicht zugleich Einwirkungen auf die Zellen, und hier insbesondere auf die Zellenwände, die Dichtungen und dergleichen haben kann.

Gemäß einer weiteren Ausgestaltung weist das Verbindungssystem Führungsmittel auf. Hierdurch kann die Montage des Akkumulatordeckels auf dem Akkumulatorgehäuse weiter erleichtert werden. Die Führungsmittel können beispielsweise durch Phasen an den Stegen oder dergleichen gebildet sein.

Ferner wird vorgeschlagen, daß der Deckel ein im Deckel integriertes Kanalsystem aufweist, mittels dem die Zellen strömungstechnisch miteinander verbunden sind. Unter dem Begriff Deckel ist im Sinne der Erfindung nicht nur der umgangssprachliche Deckel zu verstehen, sondern darüber hinaus auch ein Abdeckoder Zwischenelement, in welchem das Kanalsystem integriert ausgebildet ist. Dieses Element kann von einem weiteren, äußeren Deckel abgedeckt oder aufgenommen sein. Auf diese Weise ist es gegenüber dem Stand der Technik nicht mehr erforderlich, jede Zelle einzeln mit Wasser zu befüllen. Darüber hinaus erlaubt die Erfindung ferner, daß der Wartungsschritt des Befüllens der Zellen mit Wasser automatisiert werden kann, denn auf jede Zelle kann über das Kanalsystem zugegriffen werden. Das Vorsehen von Schläuchen kann vollständig eingespart werden. Insbesondere wenn der Deckel aus Kunststoff, beispielsweise im Spritzgußverfahren hergestellt wird, kann das Kanalsystem auf einfache Weise mit integriert werden. Kosten und Montageaufwand können eingespart werden. Vorzugsweise ist das Kanalsystem im Deckel integriert ausgebildet, insbesondere innerhalb einer Wand des Deckels, so daß zusätzliche Bauteile weitgehend vermieden werden können. Das Kanalsystem kann ferner Verzweigungen aufweisen, die in die jeweiligen Zellen münden. Natürlich können daneben oder zusätzlich auch separate Kanalsystembauelemente vorgesehen sein, beispielsweise Röhren, Schläuche oder dergleichen. Darüber hinaus kann der Deckel natürlich auch einstückig mit den einzelnen Zellendeckeln ausgebildet sein, um eine weitere Vereinfachung zu erreichen.

Vorzugsweise weist der Deckel einen Wasseranschluß auf, an dem das Kanalsystem mündet. So kann lediglich durch einen einzigen Wasseranschluß eine wassertechnische Wartung aller Zellen gemeinsam erreicht werden. Insbesondere ist der Wasseranschluß derart ausgebildet, daß er mit einfachen Mitteln mit einem Wasserversorgungsanschluß gekoppelt werden kann. Hierdurch kann die Zuverlässigkeit weiter verbessert werden, da zum Befüllen sämtlicher Zellen lediglich ein einziger Wasseranschluß erforderlich ist. Besonders vorteilhaft ist es deshalb, wenn das Kanalsystem den Wasseranschluß mit jeder Zelle verbindet.

Die Erfindung beansprucht auch einen Akkumulatordeckel und ein Akkumulatorgehäuse des Akkumulators.

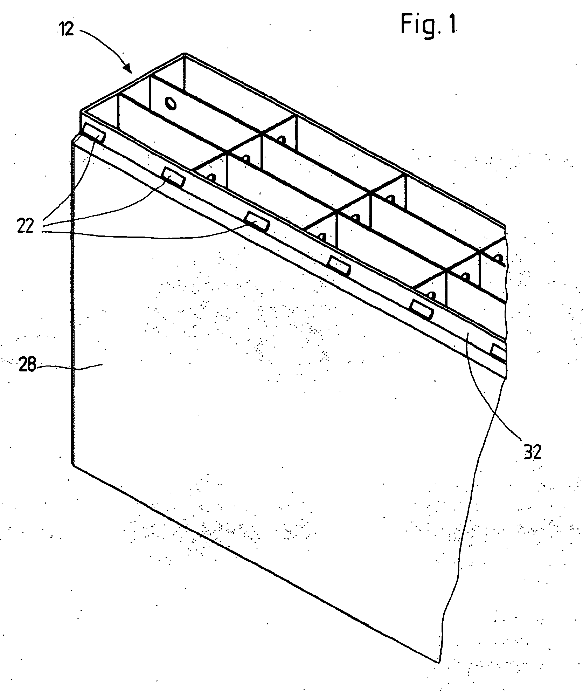

Weitere Vorteile und Merkmale sind der folgenden Beschreibung eines Ausführungsbeispiels zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel gemäß Figur 1 verwiesen. Die Zeichnungen sind Schemazeichnungen und dienen lediglich der Erläuterung des folgenden Ausführungsbeispiels.

Es zeigen:
- Figur 1: schematisch ein Akkumulatorgehäuse gemäß der Erfindung, wobei die einzelnen Zellenwände nicht dargestellt sind,
- Figur 2: schematisch eine dem Akkumulatorgehäuse zugewandte Seite eines Akkumulatordeckels gemäß der Erfindung,
- Figur 3: einen schematisch perspektivischen Ausschnitt aus einer Wand des Akkumulatorgehäuses gemäß Figur 1,
- Figur 4: schematisch einen Ausschnitt in einem Eckbereich des Akkumulatordeckels gemäß Figur 2 und
- Figur 5: eine schematische Ausschnittsansicht des mit dem Akkumulatorgehäuse verbundenen Akkumulatordeckels gemäß der Erfindung.

In Figur 1 ist schematisch perspektivisch ein Akkumulatorgehäuse 12 dargestellt, welches aus vier Wänden 28 gebildet ist, die mit einer nicht dargestellten, Bodenplatte ein rechteckiges, nach oben offenes Gehäuse bilden. Nach oben offen meint, daß der Elektrolyt im geöffneten Zustand der Zelle nicht auslaufen kann. Die Bodenplatte und die Wände 28 sind miteinander verschweißt. Nicht dargestellt ist der innere Aufbau des Akkumulatorgehäuses 12, in dem einzelne Zellen angeordnet sind, die ebenfalls nach oben offen sind. In der praktischen Ausgestaltung sind hierfür Zellenwände vorgesehen, die mit den Wänden 28 sowie der Bodenplatte fluiddicht verschweißt sind. Das Akkumulatorgehäuse 12 dient zur Aufnahme von Blei-Säure-Zellen, vorliegend Blei-Schwefelsäure-Zellen. In bekannter Weise sind Bleielektroden in einer Schwefelsäure als Elektrolyt eingesetzt. Gleichpolige Elektroden innerhalb einer Zelle sind vorliegend parallelgeschaltet. Die einzelnen Zellen hingegen sind über nicht näher dargestellte elektrische Verbindungen miteinander in Reihe geschaltet. An den Enden der Reihenschaltung sind Bleipole vorgesehen, die den Akkumulatordeckel 10 im geschlossenen Zustand des Akkumulators im Bereich von Öffnungen 30 durchragen, so daß diese elektrisch kontaktierbar sind. Diese bilden den Anschluß des Akkumulators.

Zu erkennen ist ferner in Figur 1, daß im oberen Randbereich der Wände 28 beabstandet zueinander eine Vielzahl von Rastnasen 22 angeordnet sind. Die Rastnasen 22 sind in einer Ausnehmung 32 angeordnet, die es ermöglicht, daß die Rastnasen 22 nicht über die Wand 28 hinaus nach außen ragen.

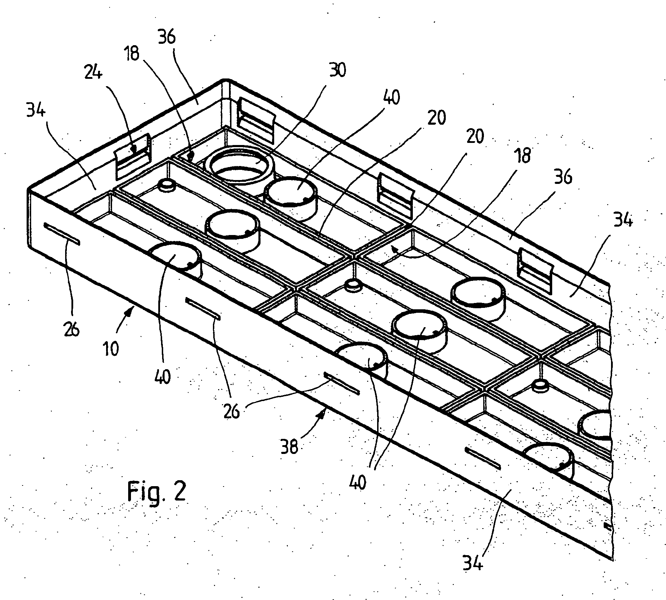

In Figur 2 ist ein zugehöriger Akkumulatordeckel 10 in perspektivischer Ansicht von seiner dem Akkumulatorgehäuse 12 zugewandten Seite dargestellt. Wie aus Figur 2 zu ersehen ist, weist der Akkumulatordeckel 10 eine im Wesentlichen rechteckförmige Grundfläche 38 auf, an deren Außenkanten Stege 34 in Richtung Verbindungsbereich Akkumulatorgehäuse 12 eingeformt sind. In den Stegen 34 sind nach innen gerichtet Rastnuten 24 eingeformt, deren Position mit den Rastnasen 22 des Akkumulatorgehäuses 12 korrespondiert. Ferner ist im Bereich der Rastnuten 24 jeweils eine schlitzförmige Öffnung 26 vorgesehen, über die im verrasteten Zustand mittels eines Werkzeugs die Rastnasen 22 zur Entrastung betätigbar sind.

Das stirnseitige, dem Akkumulatorgehäuse 12 zugewandte Ende der Stege 34 ist ferner innenseitig mit einer Fase 36 versehen, die als Einführhilfe dient und die Montage des Akkumulatordeckels 10 auf dem Akkumulatorgehäuse 12 erleichtert. Hierdurch kann eine automatische Zentrierung in die korrekte Position erreicht werden.

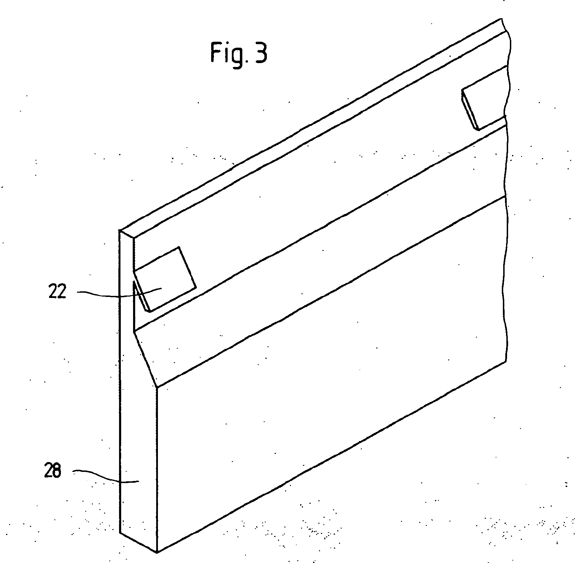

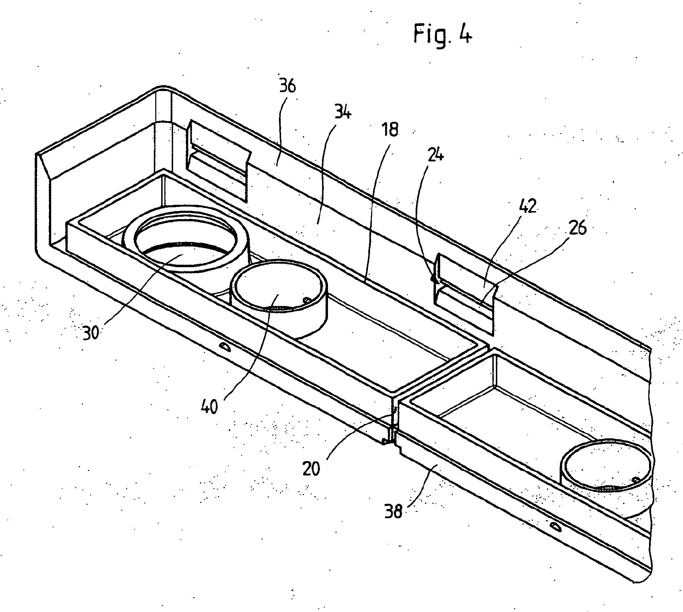

Auf der Grundfläche 38 sind akkumulatorgehäuseseitig Stege 18 angeordnet, die vorliegend den einzelnen Zellen entsprechende rechteckförmige umlaufende Stege bilden. Die Stege 18 sind vorliegend mit einer Nut 20 versehen, in die im verschlossenen Zustand Enden der Zellenwände aufgenommen werden. Figur 4 verdeutlicht diesen Sachverhalt in einer vergrößerten Ausschnittsdarstellung im Bereich der Poldurchführung 30. Zu erkennen ist ferner, daß die Nut 24 einen Absatz 42 aufweist, hinter den die Rastnase 22 eingreifen kann, damit eine Verrastung und somit eine Verbindung des Akkumulatordeckels 10 mit dem Akkumulatorgehäuse 12 erreicht werden kann. Aus Figur 3 ist ferner ersichtlich, daß die Rastnase 22 einstückig mit der Wand 28 ausgebildet ist. Sie ist ferner elastisch ausgebildet, so daß während des Verschließens beziehungsweise Öffnens die Rastnase 22 dem Absatz 42 am Akkumulatordeckel 10 ausweichen kann. Zum Lösen der Verbindung kann durch die Öffnung 26 ein Werkzeug eingeführt werden, welches die Rastnase 22 soweit nach innen drückt, daß die Verrastung zwischen der Rastnase 22 und der Rastnut 24 außer Eingriff kommt. In diesem Zustand kann dann der Akkumulatordeckel 10 vom Akkumulatorgehäuse 12 abgenommen werden.

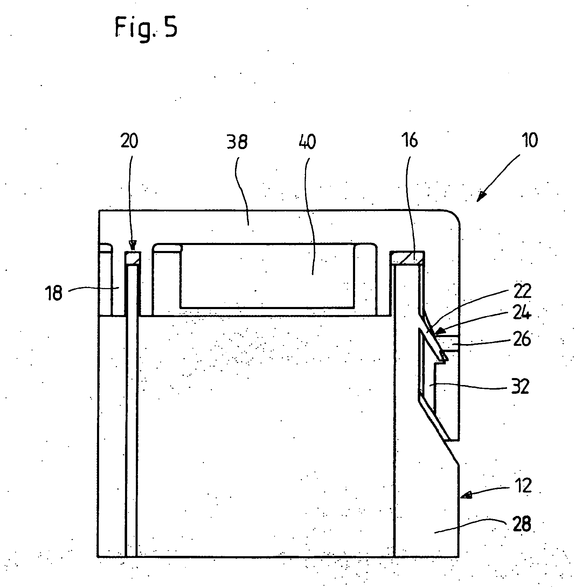

Figur 5 zeigt einen Schnitt durch einen geschlossenen Akkumulator, und zwar im Verbindungsbereich des Akkumulatordeckels 10 mit dem Akkumulatorgehäuse 12. Zu erkennen ist der Verrastungszustand zwischen der Rastnase 22 und der Rastnut 24. Ferner ist zu erkennen, daß die Wand 28 in die durch die Stege gebildete Nut 20 hineinragt. Gleiches gilt für die weiteren Zellenwände. Im oberen Bereich der Nut 20 ist ein Dichtungsring 16 angeordnet, der vorliegend eine Vorspannung erzeugt. Diese sorgt dafür, daß die Verrastung zwischen der Rastnase 22 und der Rastnut 24 zusätzlich verstärkt wird. Auf diese Weise kann ein Entrasten durch versehentliches Betätigen der Rastnase 22 reduziert werden.

Der Dichtungsring 16 bewirkt darüber hinaus einen fluiddichten Verschluß der einzelnen Zellen des Akkumulators untereinander. Auf diese Weise kann ein sicherer Betrieb gewährleistet werden. Zugleich erreicht die Erfindung eine einfache Montage, da lediglich durch Handhabung eines einzelnen Elements der Akkumulator vollständig zu Wartungszwecken geöffnet werden kann.

Das in den Figuren dargestellte Ausführungsbeispiel dient lediglich der Erläuterung der Erfindung und ist für diese nicht beschränkend. Natürlich können die einzelnen Elemente auch in dualer Weise angeordnet sein, beispielsweise die Rastnasen am Akkumulatordeckel und die Rastnuten am Akkumulatorgehäuse. Auch weitere Verbindungen oder Kombinationen wird der Fachmann bei Bedarf vorsehen.

### Bezugszeichenliste

- 10: Akkumulatordeckel
- 12: Akkumulatorgehäuse
- 16: Dichtungsring
- 18: Steg
- 20: Nut
- 22: Rastnase
- 24: Rastnut
- 26: Öffnung
- 28: Wand
- 30: Öffnung
- 32: Ausnehmung
- 34: Steg
- 36: Fase
- 38: Grundfläche
- 40: Stopfenöffnung
- 42: Absatz

## Patentansprüche

1. Akkumulator mit einem Akkumulatorgehäuse (12), welcher eine Mehrzahl von elektrolytischen Zellen aufweist, mit einem die Zellen elektrolytdicht verschließenden Akkumulatordeckel (10), der lösbar am Akkumulatorgehäuse (12) angeordnet ist, wobei der Akkumulatordeckel (10) zu Zellenwänden gegenüberliegend angeordnete Stege (18) aufweist,
**dadurch gekennzeichnet**
**daß** die Stege (18) stirnseitig eine Nut (20) aufweisen.

2. Akkumulator nach Anspruch 1, **dadurch gekennzeichnet, daß** der Akkumulatordeckel (10) und/oder das Akkumulatorgehäuse (12) die Zellen elektrolytdicht verschließende Dichtungsmittel (16, 18, 20) aufweisen.

3. Akkumulator nach Anspruch 1 oder 2, **dadurch gekennzeichnet, daß** in der Nut (20) ein Dichtungselement (16) angeordnet ist.

4. Akkumulator nach einem der Ansprüche 1 bis 3, **dadurch gekennzeichnet, daß** die Dichtungsmittel eine Labyrinthdichtung aufweisen.

5. Akkumulator nach einem der Ansprüche 1 bis 4, **gekennzeichnet durch** am Akkumulatordeckel (10) und/oder am Akkumulatorgehäuse (12) angeordnete Verbindungsmittel (22, 24, 26).

6. Akkumulator nach Anspruch 5, **dadurch gekennzeichnet, daß** die Verbindungsmittel Rastnuten (24) und/oder Rastnasen (22) aufweisen.

7. Akkumulator nach Anspruch 5 oder 6, **dadurch gekennzeichnet, daß** die Verbindungsmittel (22) elastisch vorgespannt sind.

8. Akkumulator nach einem der Ansprüche 5 bis 7, **dadurch gekennzeichnet, daß** die Verbindungsmittel (22, 24, 26) einstückig mit dem Akkumulatordeckel (10) und/oder mit dem Akkumulatorgehäuse (12) ausgebildet sind.

9. Akkumulator nach einem der Ansprüche 1 bis 8, **gekennzeichnet durch** Entrastmittel (26).

10. Akkumulator nach einem der Ansprüche 1 bis 9, **gekennzeichnet durch** eine Öffnung im Bereich der Rastnasen (22).

11. Akkumulator nach einem der Ansprüche 1 bis 10, **dadurch gekennzeichnet, daß** der Akkumulatordeckel (10) gegenüber dem Akkumulatorgehäuse (12) in Öffnungsrichtung vorgespannt ist.

12. Akkumulator nach Anspruch 11, **dadurch gekennzeichnet, daß** der Akkumulatordeckel (10) gegenüber dem Akkumulatorgehäuse (12) durch die Dichtungsmittel (16) vorgespannt ist.

13. Akkumulator nach einem der Ansprüche 1 bis 12, **dadurch gekennzeichnet, daß** die Verbindungsmittel vor Einwirkungen aus der Zelle heraus geschützt angeordnet sind.

14. Akkumulator nach einem der Ansprüche 1 bis 13, **gekennzeichnet durch** Führungsmittel (36).

15. Akkumulatordeckel (10) des Akkumulators nach einem der vorhergehenden Ansprüche.

16. Akkumulatorgehäuse (12) des Akkumulators nach einem der Ansprüche 1 bis 14.

## Claims

1. A rechargeable battery with a rechargeable-battery housing (12), which has a plurality of electrolytic cells, with a rechargeable-battery lid (10) which closes the cells in an electrolyte-tight manner and is arranged releasably on the rechargeable-battery housing (12), wherein the rechargeable-battery lid (10) has webs (18) arranged oppositely to cell walls.
**characterised**
**in that** the webs (18) have a groove (20) on the front face.

2. The rechargeable battery according to Claim 1, **characterised in that** the rechargeable-battery lid (10) and/or the rechargeable-battery housing (12) have sealing means (16, 18, 20) which close the cells in an electrolyte-tight manner.

3. The rechargeable battery according to Claim 1 or 2, **characterised in that** a sealing element (16) is arranged in the groove (20).

4. The rechargeable battery according to any one of Claims 1 to 3, **characterised in that** the sealing means have a labyrinth seal.

5. The rechargeable battery according to any one of Claims 1 to 4, **characterised by** connection means (22, 24, 26) arranged on the rechargeable-battery housing (10) and/or on the rechargeable-battery housing (12).

6. The rechargeable battery according to Claim 5, **characterised in that** the connection means have locking grooves (24) and/or catches (22).

7. The rechargeable battery according to Claim 5 or 6, **characterised in that** the connection means (22) are elastically pretensioned.

8. The rechargeable e battery according to any one of Claims 5 to 7, **characterised in that** the connection means (22, 24, 26) are constructed integrally with the rechargeable-battery lid (10) and/or with the rechargeable-battery housing (12).

9. The rechargeable battery according to any one of Claims 1 to 8, **characterised by** unlocking means (26).

10. The rechargeable battery according to any one of Claims 1 to 9, **characterised by** an opening in the region of the catches (22).

11. The rechargeable battery according to any one of Claims 1 to 10, **characterised in that** the rechargeable-battery lid (10) is pretensioned against the rechargeable-battery housing (12) in the opening direction.

12. The rechargeable battery according to Claim 11, **characterised in that** the rechargeable-battery lid (10) is pretensioned against the rechargeable-battery housing (12) by means of the sealing means (16).

13. The rechargeable battery according to any one of Claims 1 to 12, **characterised in that** the connection means are arranged in a manner protected from influences from the cell.

14. The rechargeable battery according to any one of Claims 1 to 13, **characterised by** guide means (36).

15. A rechargeable-battery lid (10) of the rechargeable battery according to any one of the preceding claims.

16. A rechargeable-battery housing (12) of the rechargeable battery according to any one of Claims 1 to 14.

## Revendications

1. Accumulateur doté d'un carter d'accumulateur (12), lequel présente une pluralité de cellules électrolytiques, d'un couvercle d'accumulateur (10) fermant les cellules de façon étanche à l'électrolyte, lequel est disposé de façon amovible sur le carter d'accumulateur (12), le couvercle d'accumulateur (10) présentant des barrettes (18) disposées de façon opposée à des parois de cellules,
**caractérisé en ce que**
les barrettes (18) présentent côté avant une rainure (20).

2. Accumulateur selon la revendication 1, **caractérisé en ce que** le couvercle d'accumulateur (10) et/ou le carter d'accumulateur (12) présentent des moyens d'étanchéité (16, 18, 20) fermant les cellules de façon étanche à l'électrolyte.

3. Accumulateur selon la revendication 1 ou 2, **caractérisé en ce qu'**un élément d'étanchéité (16) est disposé dans la rainure (20).

4. Accumulateur selon l'une quelconque des revendications 1 à 3, **caractérisé en ce que** les moyens d'étanchéité présentent un joint à labyrinthe.

5. Accumulateur selon l'une quelconque des revendications 1 à 4, **caractérisé par** des moyens de liaison (22, 24, 26) disposés sur le couvercle d'accumulateur (10) et/ou sur le carter d'accumulateur (12).

6. Accumulateur selon la revendication 5, **caractérisé en ce que** les moyens de liaison présentent des rainures d'encliquetage (24) et/ou des ergots d'encliquetage (22).

7. Accumulateur selon la revendication 5 ou 6, **caractérisé en ce que** les moyens de liaison (22) sont précontraints de façon élastique.

8. Accumulateur selon l'une quelconque des revendications 5 à 7, **caractérisé en ce que** les moyens de liaison (22, 24, 26) sont conçus d'une seule pièce avec le couvercle d'accumulateur (10) et/ou avec le carter d'accumulateur (12).

9. Accumulateur selon l'une quelconque des revendications 1 à 8, **caractérisé par** des moyens de désencliquetage (26).

10. Accumulateur selon l'une quelconque des revendications 1 à 9, **caractérisé par** une ouverture dans la zone des ergots d'encliquetage (22).

11. Accumulateur selon l'une quelconque des revendications 1 à 10, **caractérisé en ce que** le couvercle d'accumulateur (10) est précontraint par rapport au carter d'accumulateur (12) dans le sens d'ouverture.

12. Accumulateur selon la revendication 11, **caractérisé en ce que** le couvercle d'accumulateur (10) est précontraint par rapport au carter d'accumulateur (12) par les moyens d'étanchéité (16).

13. Accumulateur selon l'une quelconque des revendications 1 à 12, **caractérisé en ce que** les moyens de liaison sont disposés de façon protégée des effets à partir de la cellule.

14. Accumulateur selon l'une quelconque des revendications 1 à 13, **caractérisé par** des moyens de guidage (36).

15. Couvercle d'accumulateur (10) de l'accumulateur selon l'une quelconque des revendications précédentes.

16. Carter d'accumulateur (12) de l'accumulateur selon l'une quelconque des revendications 1 à 14.
